# EUROPEAN PATENT APPLICATION

(11) **EP 4 749 692 A2**
(43) Date of publication of application: **27.05.2026**
(21) Application number: 25211447.5
(22) Date of filing: 27.10.2025
(51) Int. Cl.: H01M 4/04, H01M 4/66, H01M 10/0525, H01M 50/531

(54) **ELECTRODE ASSEMBLY AND METHOD OF MANUFACTURING THE ELECTRODE ASSEMBLY**

(30) Priority: 31.10.2024 KR 20240152597
(71) Applicant: SAMSUNG SDI CO., LTD., Yongin-si, Gyeonggi-do 17084 (KR)
(72) Inventor: CHEONG, Kwangjo, Yongin-si, Gyeonggi-do 17084 (KR)
(74) Representative: Maiwald GmbH

(57) **Abstract**

An electrode assembly includes an electrode plate including a coated portion where an active material is coated on sides of a composite substrate and an uncoated portion where the active material is not provided on the composite substrate. A conductor is coupled to the uncoated portion, and an insulating layer covers at least a part of each of the uncoated portion, the coated portion, and the conductor. The uncoated portion is coupled to a first side of the conductor, and the insulating layer is disposed on a second side of the conductor that is opposite to the first side.

## Description

### BACKGROUND

### Field

Aspects of the present disclosure relate to an electrode assembly and a method of manufacturing the electrode assembly.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

There is a need to reduce the weight of secondary batteries used in portable IT devices, automobiles, and the like. In order to reduce the weight of secondary batteries, conventional technologies have been developed in making thinner materials used in secondary batteries, such as substrates, separators, and exterior materials, or improving the physical properties of active materials so as to increase energy density. However, some of these developments result in a less safe secondary battery.

The above information disclosed in this Background section is for enhancement of understanding of the background of the present disclosure, and therefore, it may contain information that does not constitute related (or prior) art.

### SUMMARY

Embodiments of the present disclosure provide an electrode assembly and a method of manufacturing the electrode assembly.

These and other aspects and features of the present disclosure will be described in or will be apparent from the following description of embodiments of the present disclosure.

An electrode assembly of the present disclosure includes an electrode plate comprising a coated portion where an active material is coated on sides of a composite substrate and an uncoated portion where the active material is not provided on the composite substrate, a conductor coupled to the uncoated portion, and an insulating layer covering at least a part of each of the uncoated portion, the coated portion, and the conductor, wherein the uncoated portion is coupled to a first side of the conductor, and the insulating layer is disposed on a second side of the conductor that is opposite the first side of the conductor.

According to an embodiment, the composite substrate includes a polymer substrate, a first metal layer on a first surface of the polymer substrate, and a second metal layer on a second surface of the polymer substrate, and the first metal layer and the second metal layer are formed of a same material.

According to an embodiment, the conductor includes a region coupled to the uncoated portion, , and the region is located in the insulating layer when viewed in a direction perpendicular to the second side of the conductor.

According to an embodiment, the region is spaced apart from the coated portion.

According to an embodiment, a distance by which the region is spaced apart from the coated portion is at least 0.3 mm.

According to an embodiment, an end of the first insulating layer is located at least 0.5 mm from an end of the region.

According to an embodiment, the insulating layer further includes a second insulating layer connected to the first insulating layer and covering the uncoated portion located between the region and the coated portion.

According to an embodiment, the insulating layer further includes a third insulating layer connected to the second insulating layer and covering at least a part of the coated portion.

Preferably, an end of the third insulating layer is located at least 0.3 mm lower from an end of the coated portion.

Preferably, polarity of the composite substrate is positive, and a length of the region is 1.5 mm to 5.5 mm.

Preferably, polarity of the composite substrate is negative, and a length of the region is 2.0 mm to 6.0 mm.

According to an embodiment, the conductor comprises a first conductor coupled to the first metal layer and a second conductor coupled to the second metal layer, and the first conductor comprises a first region coupled to the first metal layer and a second region coupled to the second conductor.

According to an embodiment, the second region is spaced from the first region.

According to an embodiment, the insulating layer includes a first insulating layer in which the first region is inside when viewed in a direction perpendicular to the second side of the conductor, and a second insulating layer connected to the first insulating layer, and the second region is located inside the second insulating layer when viewed in the direction perpendicular to the second side of the conductor.

According to an embodiment, a length of the second insulating layer is at least 0.25 times a length of the first insulating layer.

According to an embodiment, a terminal end of the second conductor corresponds to a terminal end of the second region.

Preferably, the insulating layer comprises at least one of alumina or boehmite.

Preferably, the insulating layer comprises a ceramic and a binder, and a ratio of the binder relative to the ceramic is 15 wt% to 45 wt%.

A method of manufacturing an electrode assembly of the present disclosure includes preparing electrode plates, each of the electrode plates comprising a coated portion where an active material is coated on sides of a composite substrate, and an uncoated portion where the active material is not provided on the composite substrate, coupling a conductor to the uncoated portion of each of the electrode plates, disposing an insulating layer to cover at least a part of the uncoated portion of each of the electrode plates, the coated portion of each of the electrode plates, and the conductor, and plurality of electrode plates, to which the conductors are coupled and on which the insulating layers are disposed, with a separator interposed between the electrode plates.

Preferably, the composite substrate includes a polymer substrate, a first metal layer disposed on a first surface of the polymer substrate, and a second metal layer disposed on a second surface of the polymer substrate, and the first metal layer and the second metal layer are formed of a same material.

According to embodiments of the present disclosure, by including a polymer substrate therein, the weight of a composite substrate may be reduced. Accordingly, the energy density of a secondary battery including the composite substrate may be improved.

According to some embodiments of the present disclosure, an area in which a conductor is attached and an area in which an insulating layer is disposed may be formed so as not to be spaced apart from each other; rather, the area in which the conductor is attached and the area in which the insulating layer is coated may overlap. Accordingly, the length of an uncoated portion required for attaching the conductor may be reduced, and the energy density of an electrode assembly may be improved.

According to some embodiments of the present disclosure, because a first conductor and a second conductor are coupled to both sides of a composite substrate and are firmly combined, the composite substrate and the conductor may conduct electricity more stably. Accordingly, a defect rate of the electrode assembly may be reduced.

According to some embodiments of the present disclosure, a second conductor, which is coupled to both sides of the composite substrate, may be provided only as is required for conduction. Accordingly, because the amount of the conductor that is connected to a strip terminal in each of a plurality of electrode plates may be reduced, welding of the conductor and the strip terminal may be facilitated.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings illustrate embodiments of the present disclosure, and further describe aspects and features of the present disclosure together with the detailed description of the present disclosure. Thus, the present disclosure should not be construed as being limited to the drawings.
FIG. 1 illustrates a secondary battery according to an embodiment of the present disclosure.
FIG. 2 is a diagram of a composite substrate according to an embodiment of the present disclosure.
FIG. 3 is a cross-sectional view of part of an electrode assembly according to an embodiment of the present disclosure.
FIG. 4 is a diagram of an electrode assembly, viewed from a direction perpendicular thereto, in which an insulating layer is partially omitted, according to an embodiment of the present disclosure.
FIG. 5 is a diagram of a conductor coupled to a composite substrate according to an embodiment of the present disclosure.
FIG. 6 is a diagram of a conductor coupled to a composite substrate according to an embodiment of the present disclosure.
FIG. 7 is a diagram of an electrode assembly from which an insulating layer is omitted, according to an embodiment of the present disclosure.
FIG. 8 is a diagram of an electrode assembly from which an insulating layer is omitted, according to an embodiment of the present disclosure.
FIG. 9 is a flowchart of a method of manufacturing an electrode assembly according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same." Thus, the phrase "substantially the same" may include a case having a deviation considered small in the art, for example, 5% or less. In addition, when a certain parameter is referred to as being uniform in a given region, it may mean that it is uniform in an averaged sense.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components."

Throughout the specification, when "A and/or B" is stated, it means A, B or A and B, unless otherwise stated. That is, "and/or" includes any or all combinations of multiple items enumerated. When "C to D" is stated, it means C or more and D or less, unless otherwise specified.

In the present disclosure, the sizes of the layers and regions shown in the drawings and their relative sizes may be exaggerated for clarity of explanation. That is, the sizes shown in the drawings are merely for convenience and the present disclosure is not limited thereto. Also, the same reference numerals throughout the entire specification refer to the same components.

In the present disclosure, a "vertical length" may be measured in an electrode plate including a coated portion on which an active material is coated on both sides of a substrate and an uncoated portion on which an active material is not coated, based on the direction in which the uncoated portion extends. That is, when viewed in a direction perpendicular to the direction in which the uncoated portion extends, the height or vertical length of a specific configuration may be measured. In the present disclosure, the upper side of the drawing may be referred to as the "upper" or "top" of the structure illustrated in that drawing, and the lower side thereof may be referred to as the "lower" or "bottom." In that case, the vertical length may be measured based on the direction from the top to the bottom of the structure illustrated in the drawing. Such relative terms, including "upper," "top," and so forth, may be used to describe relationships among structures shown in the drawing, and the present disclosure is not limited by those terms.

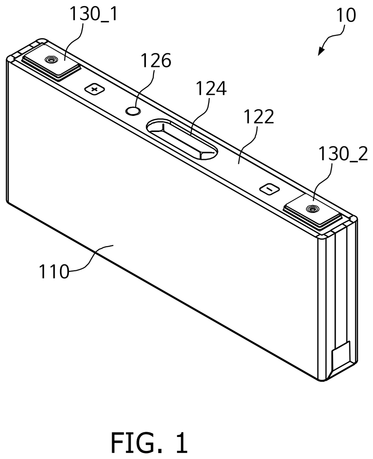

FIG. 1 illustrates a secondary battery 10 according to an embodiment of the present disclosure. Referring to FIG. 1, the secondary battery 10 according to one or more embodiments of the present disclosure may include at least one electrode assembly wound with a separator as an insulator between the positive electrode and the negative electrode, a case 110 in which the electrode assembly is received (or accommodated) therein, and a cap assembly 120 coupled to an opening of the case 110.

The secondary battery 10 according to one or more embodiments will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the positive electrode and the negative electrode may include a current collector made of a thin metal foil having a coated portion on which an active material is coated and an uncoated portion on which an active material is not coated.

The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

The case 110 may form the overall outer appearance of the secondary battery 10 and may be made of a conductive metal, such as aluminum, aluminum alloy, or nickel-plated steel. In addition, the case 110 may provide a space in which the electrode assembly is accommodated.

The cap assembly may include a cap plate 122 covering an opening in the case 110, and the case 110 and the cap plate 122 may be made of a conductive material. The positive and negative electrode terminals 130_1 and 130_2 and electrically connected to the positive and the negative electrode, respectively, may be installed to penetrate (or extend through) the cap plate 122 and protrude outwardly therethrough.

In addition, outer peripheral surfaces (e.g., circumferential surfaces) of upper pillars of the positive and negative electrode terminals 130_1 and 130_2 and protruding outwardly from the cap plate 122 may be threaded and may be fixed to the cap plate 122 by utilizing nuts.

However, the present disclosure is not limited thereto, and the positive and negative electrode terminals 130_1 and 130_2 may have a rivet structure and may be riveted or welded to the cap plate 122.

In addition, the cap plate 122 may be made of a thin plate and may be coupled to the opening in the case 110, and an electrolyte injection port into which a sealing stopper 124 may be located (e.g., formed) in the cap plate 122, and a vent portion 126 having a notch 128 may be installed.

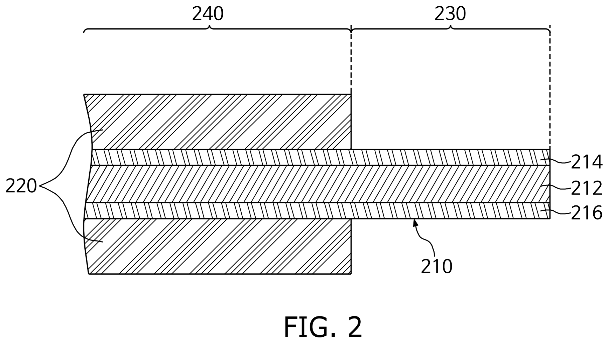

In an embodiment, the secondary battery 10 may include an electrode assembly. The electrode assembly may include an electrode plate that includes a coated portion on both sides of a composite substrate where an active material is coated, and an uncoated portion on the composite substrate where an active material is not provided. A conductor may be coupled to the uncoated portion, and an insulating layer may cover at least a portion of each of the uncoated portion, the coated portion, and the conductor. An example of the composite substrate is described in detail below with reference to FIG. 2.

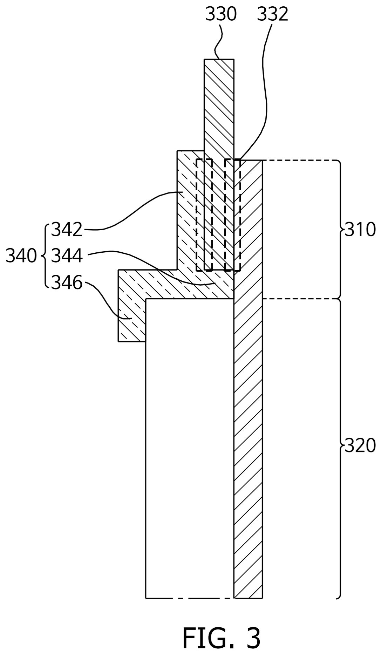

The uncoated portion may be coupled to a first side of the conductor. In addition, an insulating layer may be disposed on a second side of the conductor opposite the first side. An example of such a conductor and insulating layer is described in detail below with reference to FIGS. 3 to 8.

FIG. 2 is a diagram of a composite substrate 210 according to an embodiment of the present disclosure. An electrode plate (for example, the electrode plate described above with respect to FIG. 1) may include a coated portion 240 on both sides of the composite substrate 210 where an active material 220 is applied, and an uncoated portion 230 where an active material is not coated on the composite substrate 210. The composite substrate 210 may include a polymer substrate 212, a first metal layer 214 disposed on one surface of the polymer substrate 212, and a second metal layer 216 disposed on the other surface of the polymer substrate 212. Here, the first metal layer 214 and the second metal layer 216 disposed on the polymer substrate 212 may be formed of the same material. In some examples, the polymer substrate 212 may include PET (polyethylene terephthalate), and the metal layer 214 may include aluminum (Al) or copper (Cu). But the present disclosure is not limited to these examples.

In an embodiment, the first metal layer 214 and the second metal layer 216 disposed on surfaces of the polymer substrate 212 may include aluminum (Al). In this configuration, the active material 220 disposed on the metal layer 214 may be a positive electrode active material, and the electrode plate may function as a positive electrode plate. In other embodiments, the first metal layer 214 and the second metal layer 216 may include copper (Cu). In such configurations, the active material 220 disposed on the metal layer 214 may be a negative electrode active material, and the electrode plate may function as a negative electrode plate.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The current collector may be aluminum (Al) but is not limited thereto.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof).

The silicon-carbon composite may be a composite of silicon and amorphous carbon. According to an embodiment, the silicon-carbon composite may be in a form of silicon particles and amorphous carbon coated on the surface of the silicon particles.

The silicon-carbon composite may further include crystalline carbon. For example, the silicon-carbon composite may include a core including crystalline carbon and silicon particles and an amorphous carbon coating layer on a surface of the core.

By including a polymer substrate therein, the weight of the composite substrate may be reduced. Accordingly, the energy density of a secondary battery including the composite substrate may be improved.

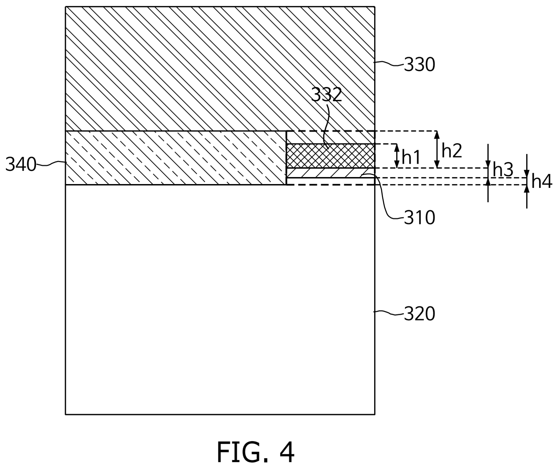

FIG. 3 is a cross-sectional view of part of an electrode assembly according to an embodiment of the present disclosure. FIG. 4 is a diagram of an electrode assembly, as viewed from a direction perpendicular thereto, in which an insulating layer 340 is partially omitted. The electrode assembly may include an electrode plate having an uncoated portion 310 on both sides of a composite substrate (for example, 210 of FIG. 2) where an active material is not provided, a coated portion 320 of active material on both sides of the composite substrate, a conductor 330 coupled to the uncoated portion 310, and an insulating layer 340. Here, the insulating layer 340 may cover at least a portion of each of the uncoated portion 310, the coated portion 320, and the conductor 330.

In an example compared to embodiments of the present disclosure, a region in which the uncoated portion and the conductor are coupled may be separated from a region in which an insulating layer is disposed. For example, an insulating layer may be formed separately below the region in which the uncoated portion and the conductor are coupled (i.e., below the conductor coupled to the uncoated portion). In that case, the length of the uncoated portion may be increased for the region in which the uncoated portion and the conductor are coupled and the region in which the insulating layer is disposed. Accordingly, due to the increased length of the uncoated portion, the energy density of the electrode assembly is reduced.

In embodiments of the present disclosure, a first side of the conductor 330 may be coupled to the uncoated portion 310. For example, a first side of the conductor 330 may be coupled to the uncoated portion 310 by using ultrasonic welding or the like. However, the present disclosure is not limited to coupling in this way. Also, an insulating layer 340 may be disposed on a second side of the conductor 330 opposite the first side. That is, the conductor 330 may be positioned between at least a portion of the uncoated portion 310 and at least a portion of the insulating layer 340.

The conductor 330 may include a first region 332 coupled to the uncoated portion 310. The insulating layer 340 may include a first insulating layer 342 covering the conductor 330. Here, when viewed in a direction perpendicular to the second side of the conductor 330, the first region 332 may be located inside the first insulating layer 342.

The insulating layer 340 may include a second insulating layer 344 connected to the first insulating layer 342 and a third insulating layer 346 connected to the second insulating layer 344. Here, the second insulating layer 344 may cover a part of the uncoated portion 310 located between the first region 332 and the coated portion 320. The third insulating layer 346 may cover at least a part of the coated portion 320. Accordingly, the insulating layer 340 may cover at least a part of each of the uncoated portion 310, the coated portion 320, and the conductor 330.

An area of the first insulating layer 342 may be greater than an area of the first region 332. Referring to FIG. 4, the horizontal length of the first insulating layer 342 and the horizontal length of the first region 332 may be the same. A vertical length (h2) of the first insulating layer 342 may be greater than a vertical length (h1) of the first region 332. Specifically, an upper end of the first insulating layer 342 may be at least 0.5 mm higher than an upper end of the first region 332. That is, the vertical length (h2) of the first insulating layer 342 may be at least 0.5 mm greater than the vertical length (h1) of the first region 332.

The first region 332 may be spaced apart from the coated portion 320. Referring to FIG. 4, a distance (h3) that the first region 332 is spaced apart from the coated portion 320 may be at least 0.3 mm. In such an arrangement, the second insulating layer 344 may cover an uncoated portion located between the first region 332 and the coated portion 320.

The third insulating layer 346 may cover at least a portion of the coated portion 320. Referring to FIG. 4, a lower end of the third insulating layer 346 may be located at least 0.3 mm lower than an upper end of the coated portion 320. That is, a vertical length (h4) that the third insulating layer 346 covers the coated portion 320 may be at least 0.3 mm.

With the configuration depicted in FIGS. 3 and 4, the region in which the conductor is attached and the region in which the insulating layer is disposed may be not be spaced apart from each other, and the region in which the conductor is attached and the region in which the insulating layer is coated may overlap. Accordingly, the length of the uncoated portion required for attaching the conductor may be reduced, and, thus, the energy density of the electrode assembly may be improved.

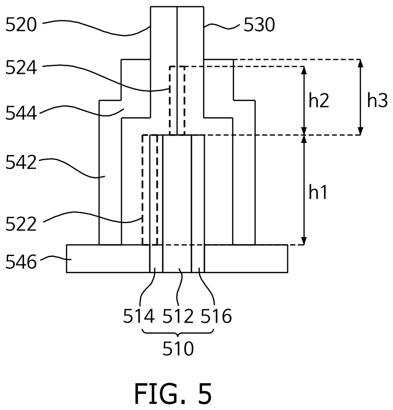

FIG. 5 is a diagram of a conductor coupled to a composite substrate 510 according to an embodiment of the present disclosure. A conductor may be coupled to an uncoated portion of the composite substrate 510 where an active material is not provided. The composite substrate 510 may include a polymer substrate 512, a first metal layer 514 disposed on a first surface of the polymer substrate 512, and a second metal layer 516 disposed on a second surface of the polymer substrate 512. The first metal layer 514 and the second metal layer 516 may be formed of the same material.

The conductor may include a first conductor 520 coupled to the first metal layer 514 and a second conductor 530 coupled to the second metal layer 516. The first conductor 520 may include a first region 522 that is coupled to the first metal layer 514 and a second region 524 that is coupled to the second conductor 530. The second region 524 may be located above the first region 522. That is, the first conductor 520 and the second conductor 530 may be coupled at an upper portion of the composite substrate 510. The first region 522 and second region 524 may be formed by using ultrasonic welding or the like, but the present disclosure is not limited thereto.

The insulating layer may cover at least a portion of each of the uncoated portion (that is, the composite substrate 510) and the conductor. For example, an insulating layer may be disposed on a second side of the first conductor 520, which faces away from the first side of the first conductor 520 where the first region 522 and the second region 524 are formed. Specifically, when viewed in a direction perpendicular to the second side of the conductor 520, the insulating layer may include a first insulating layer 542 in which the first region 522 is located, and a second insulating layer 544 in which the second region 524 is located. The second insulating layer 544 may be connected to an upper portion of the first insulating layer 542.

A vertical length (h1) of the first insulating layer 542 may be greater than a vertical length (h3) of the second insulating layer 544. In specific embodiments, the vertical length (h3) of the second insulating layer 544 may be at least 0.25 times the vertical length (h1) of the first insulating layer 542. In addition, the vertical length (h3) of the second insulating layer 544 may be greater than a vertical length (h2) of the second region 524. For example, an upper end of the second insulating layer 544 may be located at least 0.5 mm higher than an upper end of the second region 524. But the present disclosure is not limited to these example configurations.

The insulating layer 340 may be a ceramic material that may include at least one of alumina or boehmite. The particle size (D50) of the ceramic material of the insulating layer 340 may be less than 3 µm. In addition, the ceramic insulating layer 340 may include a binder, with a ratio of the binder relative to the ceramic may be 15 wt% to 45 wt%.

In FIG. 5, a coated portion of the composite substrate 510 on which an active material is applied is omitted, but the full configuration may be understood by referring to FIGS. 3 and 4., The insulating layer may be connected to a lower side of the first insulating layer 542 and may further include a third insulating layer 546 covering the uncoated portion. The insulating layer may be connected to a lower side of the third insulating layer 546 and may further include a fourth insulating layer (not shown) covering the coated portion.

The second conductor 530 shown in FIG. 5 has a similar configuration to the first conductor 520. That is, an insulating layer covers the second conductor 530 in the same manner that the insulating layer covers the first conductor 520, as described above.

Because the first conductor and the second conductor are coupled to both sides of the composite substrate and are firmly combined, the composite substrate and the conductor may conduct electricity more stably. Accordingly, a defect rate of the electrode assembly may be reduced.

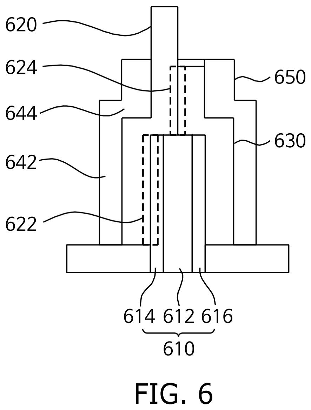

FIG. 6 is a diagram of a conductor is coupled to a composite substrate 610 according to an embodiment of the present disclosure. A conductor may be coupled to an uncoated portion of the composite substrate 610 where an active material is not provided. The composite substrate 610 may include a polymer substrate 612, a first metal layer 614 disposed on a first surface of the polymer substrate 612, and a second metal layer 616 disposed on a second surface of the polymer substrate 612. The first metal layer 614 and the second metal layer 616 may be formed of the same material.

The conductor may include a first conductor 620 coupled to the first metal layer 614 and a second conductor 630 coupled to the second metal layer 616. Here, the first conductor 620 may include a first region 622 that is coupled to the first metal layer 614 and a second region 624 that is coupled to the second conductor 630. The second region 624 may be located above the first region 622. That is, the first conductor 620 and the second conductor 630 may be coupled at an upper portion of the composite substrate 610. Such first region 622 and second region 624 may be formed by using ultrasonic welding or the like, but the present disclosure is not limited to these examples.

The insulating layer may cover at least a portion of each of the uncoated portion (that is, the composite substrate 610) and the conductor. For example, an insulating layer may be disposed on a second side of the first conductor 620 that faces away from the first side of the first conductor 620 where the first region 622 and the second region 624 are formed. When viewed in a direction perpendicular to the second side of the conductor 620, the insulating layer may include a first insulating layer 642 in which the first region 622 is located, and a second insulating layer 644 in which the second region 624 is located. The second insulating layer 644 may be connected to an upper portion of the first insulating layer 642.

In the embodiment depicted in FIG. 6, the length of the second conductor 630 is shorter than the length of the first conductor 620. To create such a configuration, after the second conductor 630 is coupled to the first conductor 620, the second conductor 630 may be cut such that a terminal end of the second conductor 630 corresponds to a terminal end of the second region 624. A third insulating layer 650 covering the second conductor 630 may cover a terminal end of the second conductor 630.

With the configuration depicted in FIG. 6, the second conductor, which is coupled to both sides of the composite substrate, may be provided only in the amount required for conduction. Accordingly, in each of a plurality of electrode plates, the amount of the conductor that is connected to a strip terminal may be reduced, making it easier to weld the conductor and the strip terminal.

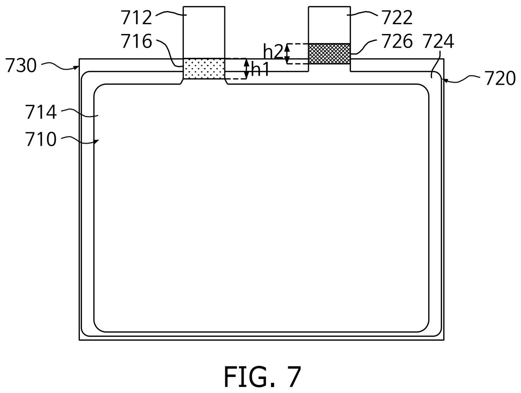

FIG. 7 is a diagram of an electrode assembly in which an insulating layer is not depicted, according to an embodiment of the present disclosure. The electrode assembly may include an electrode plate that includes a coated portion on both sides of a composite substrate (for example, 210 of FIG. 2) where an active material is applied, and an uncoated portion where an active material is not applied to the composite substrate. A conductor may be coupled to the uncoated portion, and an insulating layer may cover at least a portion of each of the uncoated portion, the coated portion, and the conductor. The electrode plate may include a positive electrode plate 710 and a negative electrode plate 720 depending on the polarity of the composite substrate. The electrode assembly may be manufactured by laminating the positive electrode plate 710, the negative electrode plate 720, and a separator 730 interposed between the positive electrode plate 710 and the negative electrode plate 720. Such an electrode assembly may be included in a secondary battery used in an electronic device. But the present disclosure is not limited with respect to the specific configuration or use of the electrode assembly.

The positive electrode plate 710 may include a first uncoated portion (not shown) and a first coated portion 714. A first conductor 712 may be coupled to the first uncoated portion at a first region 716. Here, the first region 716 may be where the first uncoated portion and the first conductor 712 are welded and coupled. A first insulating layer (not shown) may cover at least a portion of each of the first uncoated portion, the first coated portion 714, and the first conductor 712.

The negative electrode plate 720 may include a second uncoated portion (not shown) and a second coated portion 724. A second conductor 722 may be coupled to the second uncoated portion at a second region 726. Here, the second region 726 may be where the second uncoated portion and the second conductor 722 are welded and coupled. A second insulating layer (not shown) may cover at least a portion of each of the second uncoated portion, the second coated portion 724, and the second conductor 722.

The first insulating layer may encompass the first region 716. That is, an area of the first insulating layer may be larger than an area of the first region 716. Similarly, the second insulating layer may encompass the second region 726. That is, an area of the second insulating layer may be larger than an area of the second region 726.

A vertical length (h1) of the first region 716 of the positive electrode plate 710 may be different than a vertical length (h2) of the second region 726 of the negative electrode plate 720. Specifically, the vertical length (h1) of the first region 716 may be 1.5 mm to 5.5 mm, while the vertical length (h2) of the second region 726 may be 2.0 mm to 6.0 mm.

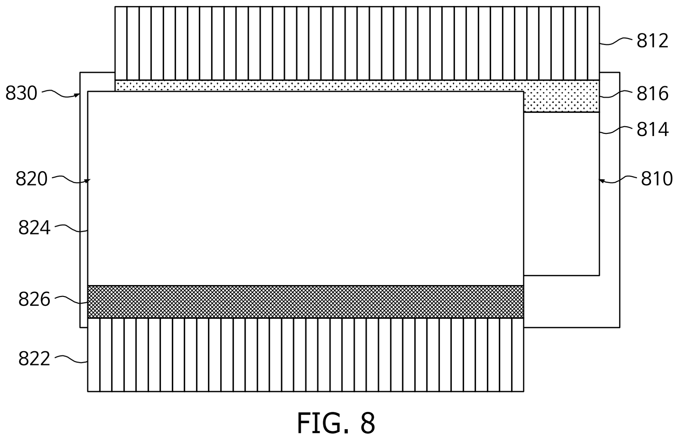

FIG. 8 is a diagram of an electrode assembly in which an insulating layer is not depicted, according to an embodiment of the present disclosure. The electrode assembly may include an electrode plate that includes a coated portion on both sides of a composite substrate (for example, 210 of FIG. 2) where an active material is applied, and an uncoated portion where an active material is not provided on the composite substrate. A conductor may be coupled to the uncoated portion, and an insulating layer may cover at least a portion of each of the uncoated portion, the coated portion, and the conductor. The electrode plate may include a positive electrode plate 810 and a negative electrode plate 820 according to the polarity of the composite substrate. The electrode assembly may be manufactured by laminating the positive electrode plate 810, the negative electrode plate 820, and a separator 830 interposed between the positive electrode plate 810 and the negative electrode plate 820. Such an electrode assembly may be included in a secondary battery requiring high output, such as an electric vehicle. But the present disclosure is not limited to such an example.

The positive electrode plate 810 may include a first uncoated portion (not shown) and a first coated portion 814. A first conductor 812 may be coupled to the first uncoated portion at a first region 816. That is, the first region 816 may be where the first uncoated portion and the first conductor 812 are welded and coupled. A first insulating layer (not shown) may cover at least a portion of each of the first uncoated portion, the first coated portion 814, and the first conductor 812.

The negative electrode plate 820 may include a second uncoated portion (not shown) and a second coated portion 824. The second conductor 822 may be coupled to the second uncoated portion at a second region 826. That is, the second region 826 may be where the second uncoated portion and the second conductor 822 are welded and coupled. A second insulating layer (not shown) may cover at least a portion of each of the second uncoated portion, the second coated portion 824, and the second conductor 822.

The first insulating layer may encompass the first region 816. That is, an area of the first insulating layer may be larger than an area of the first region 816. Similarly, the second insulating layer may encompass the second region 826. That is, an area of the second insulating layer may be larger than an area of the second region 826.

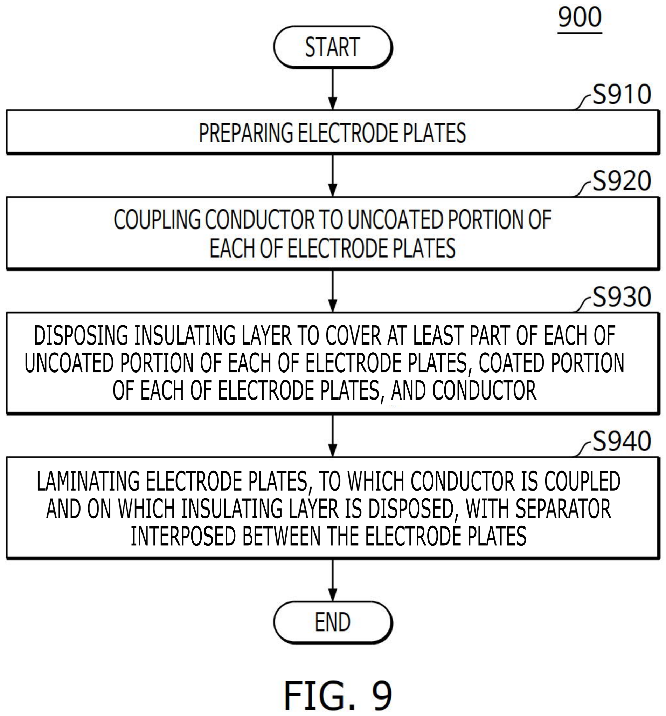

FIG. 9 is a flowchart of a method 900 of manufacturing an electrode assembly according to an embodiment of the present disclosure. The method 900 of manufacturing an electrode assembly may begin by preparing a plurality of electrode plates, with each of the electrode plates including a coated portion where an active material is coated on both sides of a composite substrate and an uncoated portion where the active material is not provided on the composite substrate (S910). The composite substrate may include a polymer substrate, a first metal layer disposed on a first surface of the polymer substrate, and a second metal layer disposed on a second surface of the polymer substrate. The first metal layer and the second metal layer may be formed of the same material.

Next, a conductor may be coupled to the uncoated portion of each of the plurality of electrode plates (S920). The insulating layer may be disposed to cover at least a portion of each of the uncoated portion of the electrode plates, the coated portion of each of the electrode plates, and the conductor (S930). Then, an electrode assembly may be made by laminating the plurality of electrode plates, to which the conductor is coupled and on which the insulating layer is disposed, with a separator interposed between the plurality of electrode plates (S940).

The conductor may include a first region that is coupled to the uncoated portion, and the insulating layer may include a first insulating layer covering the conductor. When viewed in a direction perpendicular to the second side of the conductor, the first region may be located inside the first insulating layer.

The first region may be spaced apart from the coated portion. For example, a distance by which the first region and the coated portion are spaced apart may be at least 0.3 mm. And an upper end of the first insulating layer may be located at least 0.5 mm higher than an upper end of the first region. But the present disclosure is not limited to such examples.

The insulating layer may include a second insulating layer connected to the first insulating layer and covering the uncoated portion located between the first region and the coated portion. The insulating layer may also include a third insulating layer connected to the second insulating layer and covering at least a portion of the coated portion. A lower end of the third insulating layer may be located, for example, at least 0.3 mm lower than an upper end of the coated portion.

The polarity of the composite substrate may be positive. In such a configuration, the vertical length of the first region may be 1.5 mm to 5.5 mm. In another embodiment, the polarity of the composite substrate may be negative. In such a configuration, the vertical length of the first region may be 2.0 mm to 6.0 mm.

The conductor may include a first conductor coupled to the first metal layer and a second conductor coupled to the second metal layer. The first conductor may include a first region coupled to the first metal layer and a second region coupled to the second conductor. Here, the second region may be located above the first region.

When viewed in a direction perpendicular to the second side of the conductor, the insulating layer may include a first insulating layer in which the first region is located and a second insulating layer connected to the first insulating layer. When viewed in the direction perpendicular to the second side of the conductor, the second region may be located inside the second insulating layer. A vertical length of the second insulating layer may be at least 0.25 times a vertical length of the first insulating layer. The terminal end of the second conductor may correspond to the terminal end of the second region.

The insulating layer may include at least one of alumina or boehmite. In some examples, the insulating layer includes a ceramic and a binder, with a ratio of the binder relative to the ceramic may be 15 wt% to 45 wt%.

### DESCRIPTION OF SOME REFERENCE SYMBOLS

10: battery cell
110: case
122: cap plate
124: vent portion
126: sealing stopper
130_1: positive electrode terminal
130_2: negative electrode terminal

## Claims

1. An electrode assembly comprising:
an electrode plate comprising a coated portion (320) where an active material is coated on sides of a composite substrate and an uncoated portion (310) where the active material is not provided on the composite substrate;
a conductor (330) coupled to the uncoated portion (310); and
an insulating layer (340) covering at least a part of each of the uncoated portion (310), the coated portion (320), and the conductor (330),
wherein the uncoated portion (310) is coupled to a first side of the conductor (330), and
wherein the insulating layer (340) is disposed on a second side of the conductor (330) that is opposite to the first side of the conductor (330).

2. The electrode assembly according to claim 1, wherein the composite substrate (210) comprises:
a polymer substrate (212);
a first metal layer (214) on a first surface of the polymer substrate (212); and
a second metal layer (216) on a second surface of the polymer substrate (212), and
wherein the first metal layer (214) and the second metal layer (216) are formed of a same material.

3. The electrode assembly according to claim 1 or 2, wherein the conductor (330) comprises a region (332) coupled to the uncoated portion (310),
wherein the region (332) is located in the insulating layer (340) when viewed in a direction perpendicular to the second side of the conductor (330).

4. The electrode assembly according to claim 3, wherein the region (332) is spaced apart from the coated portion (320).

5. The electrode assembly according to claim 4, wherein a distance (h3) by which the region (332) is spaced apart from the coated portion (320) is at least 0.3 mm.

6. The electrode assembly according to any one of the claims 3 to 5, wherein an end of the insulating layer (342) is located at least 0.5 mm from an end of the region (332).

7. The electrode assembly according to any one of the claims 3 to 6, wherein the part of the insulating layer (340) covering the conductor (330) is a first insulating layer (342), and
wherein the insulating layer (340) further comprises a second insulating layer (344) connected to the first insulating layer (342) and covering the uncoated portion (320) located between the region (332) and the coated portion (320).

8. The electrode assembly according to claim 7, wherein the insulating layer (340) further comprises a third insulating layer (346) connected to the second insulating layer (344) and covering at least a part of the coated portion (320).

9. The electrode assembly according to claim 8, wherein an end of the third insulating layer (346) is located at least 0.3 mm from an end of the coated portion (320).

10. The electrode assembly according to any one of the claims 2 to 9, wherein the conductor comprises a first conductor (520) coupled to the first metal layer (514) and a second conductor (530) coupled to the second metal layer (516), and
wherein the first conductor (520) comprises a first region (522) coupled to the first metal layer (514) and a second region (524) coupled to the second conductor (530).

11. The electrode assembly according to claim 10, wherein the second region (524) is spaced from the first region (522).

12. The electrode assembly according to claim 10 or 11, wherein the insulating layer comprises:
a first insulating layer (542) in which the first region (522) is inside when viewed in a direction perpendicular to the second side of the conductor (520); and
a second insulating layer (544) connected to the first insulating layer (542), and
wherein the second region (524) is located inside the second insulating layer (544) when viewed in the direction perpendicular to the second side of the conductor (520).

13. The electrode assembly according to claim 12, wherein
wherein a length of the second insulating layer is at least 0.25 times a length of the first insulating layer.

14. The electrode assembly according to any one of the claims 10 to 13, wherein a terminal end of the second conductor (530) corresponds to a terminal end of the second region (524).

15. A method of manufacturing an electrode assembly, the method comprising:
preparing (S910) electrode plates, each of the electrode plates comprising a coated portion where an active material is coated on sides of a composite substrate and an uncoated portion where the active material is not provided on the composite substrate;
coupling (S920) a conductor to the uncoated portion of each of the electrode plates;
disposing (S930) an insulating layer to cover at least a part of the uncoated portion of each of the electrode plates, the coated portion of each of the electrode plates, and the conductor; and
laminating (S940) the electrode plates, to which the conductors are coupled and on which the insulating layers are disposed, with a separator interposed between the electrode plates.
